# FASCICULE DE BREVET EUROPEEN

(11) **EP 0 591 024 B1**
(45) Date de publication et mention de la délivrance du brevet: **15.07.1998**
(21) Numéro de dépôt: 93402252.6
(22) Date de dépôt: 16.09.1993
(51) Int. Cl.: A01N 33/12, C08F 26/02, C08F 20/34, C08F 20/60, D06M 16/00, D06M 13/224, D06M 13/463

(54) **Polymère antiseptique**
Antiseptisches Polymer
Antiseptic polymer

(30) Priorité: 23.09.1992 FR 9211719
(43) Date de publication de la demande: 06.04.1994
(73) Titulaire: Centre Technique Industriel dit: INSTITUT TEXTILE DE FRANCE, 92223 Bagneux Cédex (FR); THUASNE & Cie, 42031 Saint Etienne Cedex 2 (FR)
(72) Inventeur: Chatelin, Roger, F-69380 Lissieu (FR); Bourgeois, Michel, F-69003 Lyon (FR); Leger, Bénédicte, F-69300 Calluire et Cuire (FR); Bouvier, Jean-Claude, F-42100 Saint Etienne (FR); Picolet, Jean-Pierre, F-42270 Saint Priest en Jarez (FR); Chabert, Bernard, F-69100 Villeurbanne (FR)
(74) Mandataire: Hénnion, Jean-Claude

(56) Documents cités:
- EP-A- 0 270 701
- FR-A- 2 511 001
- US-A- 4 824 867
- POLYMER vol. 28 , Février 1987 pages 325 - 331 S.M.HAMID & D.C.SHERRINGTON 'Novel quaternary ammonium amphiphilic (meth)acrylates: 1. Synthesis, melting and interfacial behaviour'
- Polymer, Vol.107, 1987, pp332-339

## Description

La présente invention concerne des procédés de préparation d'un polymère antiseptique, particulièrement un polymère susceptible d'assurer se protection contre les bactéries, champignons et autres micro-organismes, pour des supports solides notamment des matériaux textiles ou des revêtements du type vernis ou peinture, voire des compositions liquides, notamment des émulsions cosmétologiques.

Dans le présent texte on entend sous le terme générique polymère un corps qui comporte dans sa structure des motifs répétitifs, quelque soit le nombre et la nature de ces motifs. La présente définition englobe donc des produits, que l'on désigne couramment par le terme homopolymère, qui contiennent un seul type de motif, ceux que l'on désigne couramment par le terme copolymère qui contiennent plusieurs types différents de motifs et aussi ceux que l'on désigne sous le terme oligomères dans lesquelles le nombre de motifs est peu important, de quelques unités à dix unités, sous le terme télomères qui sont des oligomères comportant deux fonctions réactives terminales semblables ou différentes et sous le terme prépolymères dans lesquels le nombre de motifs est compris entre 10 et 50 unités.

La protection de supports notamment textiles, contre des agents extérieurs tels que bactéries, champignons et ... par fixation sur lesdits supports de produits présentant une activité spécifique vis-à-vis desdits agents est déjà bien connue.

Le brevet français n° 2.511.001 concerne en particulier un produit de traitement de polymères polyhydroxylés ou polyaminés à l'aide d'un sel de N oxiraneméthane N, N, N trialkylaminium de formule générale : 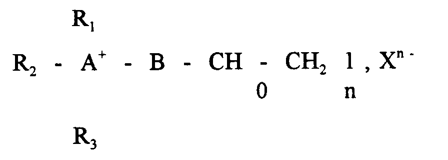 dans laquelle :
- A représente un atome d'azote ou de phosphore
- R₁, R₂, R₃ des radicaux alkyle compris entre C₁ et C₂₀, saturés ou insaturés, des radicaux alcényle ou aryle éventuellement substitués
- B un radical alkylène compris entre C₁ et C₁₀
- Xⁿ⁻ un anion
- n, un nombre valant 1, 2 ou 3
- R₃ pouvant aussi figurer le radical 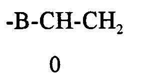
- R₁ et R₂ pouvant aussi former avec l'azote des hétérocycles.

Comme indiqué dans ce document, le procédé d'obtention d'un tel produit de traitement conduit à un rendement relativement faible de l'ordre de 60 à 70%. D'autre part l'accrochage de ce produit sur le support textile est réalisé par réaction du groupement terminal époxyde sur la structure polymérique dudit support. On sait que les époxydes sont des corps réactifs, mais limités vis-à-vis des polymères dits à hydrogènes mobiles, ce qui entraîne qu'une telle réaction est difficilement contrôlable ; s'agissant d'une réaction de condensation, la fixation est du type substitution avec un motif fixé ce qui limite l'accessibilité de la molécule fixée et donc l'efficacité de la fonction antiseptique.

S'agissant de la protection antiseptique de supports solides, notamment textiles, le premier but que se sont fixés les demandeurs est de proposer des procédés de préparation d'agents apte à conférer cette protection qui soient exempts de groupement époxyde de manière à remédier aux limitations précédemment citées.

Bien plus les demandeurs ont cherché à proposer des procédés de préparation d'agents de protection antiseptique qui soient particulièrement efficaces et dont les effets soient durables, dans la protection de support solide proprement dit, de support devenant solide à partir d'une composition liquide pâteuse ou gélifiée, ou encore de milieu liquide, notamment dans le domaine de la cosmétologie.

Ce but est parfaitement atteint par les procédés de préparation d'un polymère utilisé pour la protection antiseptique d'un support solide ou d'un milieu liquide consistant à faire intervenir au cours d'une réaction de polymérisation un monomère contenant un groupement fonctionnel éthylénique capable d'intervenir dans une réaction de polymérisation.

La publication dans Polymer, volume 28, 1987, pages 332 - 339 décrit un procédé de préparation de ce type mettant en oeuvre des monomères du type ammonium quaternaire contenant des groupements fonctionnels éthyléniques, de formule générale : 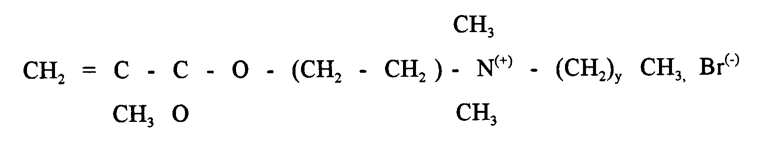 dans laquelle y est égal à 3 à 9 ou 11 mais ne décrit ni ne suggère aucune activité antiseptique pour les polymères obtenus.

Selon un premier procédé de l'invention, le monomère a la formule générale suivante, exception faite des monomères précités décrits dans Polymer : 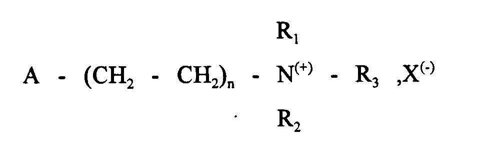 dans laquelle :
a) R₁ et R₂ sont des groupes alkyl respectivement Cₐ H_{2a +1} pour R₁ et C_{b} H_{2b+1} pour R₂, et R₃ est soit un groupe alkyl C_{c} H_{2c+1} avec c≥ 4 et 15 ≥ a+b+c ≥ 6 soit un groupe aryle de formule -(CH₂)_{d}- C₆H₅ avec d ≥ 1 et a+b+d ≤ 8
b) 3 ≥ n ≥ 1
c) A est un groupement fonctionnel éthylénique capable d'intervenir dans une réaction de polymérisation
d) X⁽⁻⁾ est un anion.

Dans le polymère obtenu, le groupement ammonium quaternaire qui confère l'activité spécifique vis-à-vis des agents extérieurs tels que bactéries, champignons et autres micro-organismes, se trouve répété autant de fois qu'il y a de motifs correspondant au monomère ayant la formule générale précitée ; le mode répétitif donne une très grande accessibilité aux micro-organismes, et donc une grande efficacité de la protection antiseptique.

De plus la sélection qui a été faite quant à la structure des groupes R₁, R₂ et R₃ attachés à l'ammonium quaternaire, se répercutant sur la longueur des chaînes carbonées de l'ensemble de ces groupes, contribue à cette accessibilité notamment lorsqu'il s'agit de protection de support solide par greffage, selon laquelle le polymère de l'invention est sous forme des greffons fixés au support, comme cela sera expliqué dans la suite du présent texte.

De préférence le groupe fonctionnel éthylénique A est le groupement vinyle ou encore un groupement de formule générale : 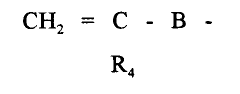 dans laquelle R₄ est - H ou -CH₃,

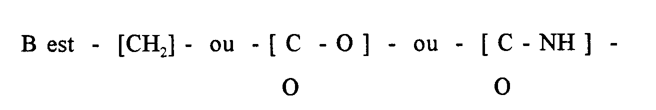

Selon une variante de réalisation le monomère à partir duquel est obtenu le polymère a la formule générale suivante : 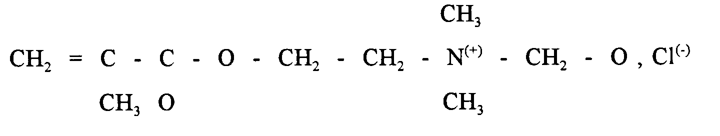 dans laquelle n₁ est égal à 1 et R₁ et R₂ sont des groupes méthyles et R₃ est un groupe benzyle.

Il est à noter que les procédés d'obtention des monomères mis en oeuvre pour l'obtention des polymères de l'invention sont des procédés simples et permettent d'obtenir des rendements supérieurs à 90%.

Par ailleurs les réactions de polymérisation qui se développent à partir d'un groupement fonctionnel éthylénique sont parfaitement connues et maîtrisables ; il en est de même de la réaction particulière, dite de greffage, qui réalise en même temps que la polymérisation la fixation de la chaîne polymérique, dénommée greffon, sur une structure tronc.

Selon un premier type de polymère, il s'agit d'un homopolymère, qui est obtenu par polymérisation du seul monomère antiseptique ayant la formule générale précitée.

Selon un second type de polymère, il s'agit d'un copolymère qui est obtenu par copolymérisation d'un monomère antiseptique ayant la formule générale précitée et d'un autre monomère, par exemple, l'acrylate d'éthyle ou l'acrylamide. On constate en effet que la réactivité du monomère antiseptique est très bonne et qu'il est donc apte à former de nombreux polymères.

Selon un autre procédé pour la protection d'un support solide à l'aide du polymère antiseptique obtenu selon un procédé consistant à faire intervenir au cours d'une réaction de polymérisation un monomère ayant la formule générale précitée ; on développe et fixe ledit polymère sur le support sous forme de greffons, au cours d'une réaction de greffage. Dans ce cas il y a une fixation irréversible des polymères/greffons sur la structure du support à protéger. Un tel procédé est particulièrement intéressant lorsqu'il s'agit de la protection antiseptique de matériaux textiles.

En particulier s'agissant d'un tissu coton greffé avec le polymère/greffon selon l'invention, la protection antiseptique est très efficace lorsque le tissu en question comporte au moins de 4 µg à 7 mg d'azote par gramme provenant du groupement ammonium quaternaire antiseptique.

Les demandeurs estiment qu'une protection antiseptique d'un support est conférée par le polymère ainsi obtenu à partir de la présence sur le support d'une quantité de polymère correspondant à la C.M.I. du monomère correspondant en phase liquide. Il est bien évident que selon les applications ce taux doit être modulé et peut l'être facilement par le principe de mise en oeuvre du greffage revendiqué.

C'est un autre objet de l'invention que de revendiquer un autre procédé pour la protection d'un support solide à l'aide d'un polymère antiseptique. De manière caractéristique le procédé consiste à imprégner ledit support à l'aide d'une suspension liquide contenant le monomère ayant la formule générale précitée et à réaliser la réaction de polymérisation in situ, dans le support. Dans ce cas il y a stabilisation du polymère antiseptique par une simple inclusion dans le support solide. Un tel procédé est particulièrement intéressant lorsqu'il s'agit de la protection antiseptique de matériaux rigides et poreux, par exemple de matériaux naturels tels que le bois.

C'est un autre objet de l'invention que de revendiquer un autre procédé pour la protection, à l'aide d'un polymère antiseptique obtenu en faisant intervenir au cours d'une réaction de polymérisation un monomère ayant la formule générale précitée : d'un support qui devient solide à partir d'une composition initiale liquide réticulable. De manière caractéristique le procédé consiste à effectuer un mélange homogène du polymère antiseptique et de la composition liquide, afin que lors de la solidification de celle-ci le polymère antiseptique soit stabilisé dans le réseau de réticulation du support. Un tel procédé s'applique en particulier à la protection antiseptique de films plastiques, de Holt Melt et de textiles enduits. Il s'applique aussi à la protection de revêtements de surface, comme une peinture ou un vernis.

C'est un autre objet de l'invention que de revendiquer un autre procédé pour la protection, à l'aide du polymère antiseptique obtenu en faisant intervenir au cours d'une réaction de polymérisation un monomère ayant la formule générale précitée : d'un milieu liquide. Selon le procédé, le milieu liquide consiste en une émulsion d'un composé cosmétologique auquel est mélangé de manière homogène ledit polymère antiseptique.

Dans tous les cas visés ci-dessus, le fait que la protection antiseptique est réalisée à l'aide du polymère ainsi obtenu présente de grands avantages, en plus de l'accessibilité aux microorganismes dont il a déjà été question. Sa structure polymérique permet une bonne stabilisation dans les supports solides, même lorsqu'il n'y a pas une fixation solide de type covalente sur le support ; cela évite les migrations que l'on obtiendrait inévitablement en mettant en oeuvre un composé antiseptique tel que celui décrit dans le document US 4,829,867. De plus s'agissant de la protection antiseptique d'une émulsion cosmétique, sa forme polymérique évite de casser l'émulsion et le rend moins volatile.

La présente invention sera mieux comprise à la lecture des exemples suivants de réalisation de polymères antiseptiques obtenus en faisant intervenir, au cours d'une réaction de polymérisation, un monomère ayant la formule générale précitée.

1er exemple : Dans ce premier exemple, le monomère antiseptique est un bromure d'ammonium quaternaire dont les groupements liés à l'atome d'azote sont respectivement deux groupements méthyles pour R₁ et R₂, un groupement octyle pour R₃ et un méthacrylate d'éthyle ; il répond à la formule générale suivante :

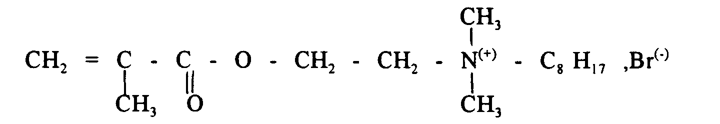

Pour obtenir ce monomère on fait réagir le bromooctane sur du méthacrylate de diméthyl amino éthyle.

Dans un exemple précis de réalisation, on part de 47,10 g de méthacrylate de dyméthyl amino éthyle auxquels on ajoute 90 ml de dyméthyl formamide. On ajoute ensuite 57,60 g de bromo-1 octane. On agite ensuite ce milieu réactionnel, en le protégeant de la lumière, à température ambiante à l'aide d'un agitateur du type barreau aimanté. La durée de la réaction est de 48 h.

On ajoute ensuite 60 ml de chloroforme en refroidissant le mélange dans un bain de glace. Le mélange ainsi obtenu est versé dans 500 ml d'éther éthylique sous agitation vive. Il apparaît un précipité blanc qui est filtré puis séché sous vide sur P₂O₅.

On récupère ainsi 95,3 g de produit sec, ce qui correspond à un rendement réactionnel de 91%.

Le produit obtenu répond à la formule précitée. Il est pur, comme on peut le vérifier par RMN du proton, dosage de l'halogénure par le nitrate d'argent et dosage des insaturations par réaction de la morpholine en milieu acide acétique/dioxanne.

L'activité antiseptique du monomère ainsi obtenu est mesurée par évaluation de la concentration minimum inhibitrice (C.M.I.) selon les modalités suivantes. On réalise des gammes de dilutions successives dudit monomère dans du milieu nutritif contenant à pH 7,4 et dans un litre d'eau distillée : 375 g d'infusion de coeur, 100 g de biothone et 5 g de chlorure de sodium.

On répartit dans des tubes à essais une première gamme de dilution à raison de 1,10 , 100, 1000 et 10000µg/ml du monomère antiseptique. Chaque tube est ensuite inoculé par une suspension bactérienne de Staphyloccocus aureus à environ 5.10⁵ germes/ml. Les tubes sont ensuite placés 30 heures à l'étuve à 37 ± 1°C. On observe ensuite la turbidité du milieu nutritif.

Cette observation permet de déterminer des valeurs d'encadrement de la concentration minimum inhibitrice (C.M.I.) : si le contenu du milieu nutritif d'un tube donné est clair, cela signifie que la concentration en monomère antiseptique est supérieure à la C.M.I. ; si le contenu est trouble cela signifie que la concentration est inférieure à la C.M.I.

Par réalisation de gammes de dilutions successives entre les valeurs du dernier tube dont le milieu nutritif est trouble et du premier tube dont le milieu nutritif est clair, on peut ainsi resserrer l'intervalle dans lequel est comprise la C.M.I. du monomère antiseptique.

Pour le monomère antiseptique de ce premier exemple, il a été trouvé que la C.M.I. était comprise entre 70 et 80µg/ml.

Dans une application à la protection antiseptique d'un tissu de coton, on a développé et fixé un polymère sur ledit coton, sous forme de greffons, à l'aide du monomère antiseptique ci-dessus dans les conditions définies ci-après.

Des pièces de tissu de coton blanchi pesant 25g environ sont irradiées par bombardement électronique à une dose d'environ 20 kGy. Elles sont ensuite immergées dans des solutions contenant 25 g du monomère antiseptique et 250 ml d'eau.

Lesdites pièces de tissu sont alors exprimées avec un foulard dont la pression des cylindres d'écrasement est de l'ordre de 7 bars. Elles sont enfin rincées à l'eau distillée après un temps de repos de 45 minutes environ.

La quantité de monomère antiseptique polymérisée et fixée sur le coton a été déterminée en mesurant le taux d'azote, mesuré par un dosage de Kjeldahl. Dans les conditions ci-dessus, le taux d'azote était de 0,34 mg d'azote par gramme de tissu, ce qui correspond à un taux de greffage relativement faible.

Pour vérifier la protection antiseptique conférée par le polymère antiseptique précité, fixé sous forme de greffons, on a utilisé un procédé bactériologique qui consiste à mettre en contact pendant un temps déterminé le tissu ainsi greffé et une suspension bactérienne de Staphyloccocus aureus et à apprécier, après ce temps de contact, le nombre de micro-organismes survivants. Le Staphyloccocus aureus a comme référence ATCC 9144.

Plus précisément, les pièces de tissu de coton greffé ainsi que deux tissus coton témoin non greffé sont découpés en carrés de 300 mg environ et déposés dans des boîtes de Pétri stériles et vides. Chaque carré de tissu est inoculé avec 200µl d'une suspension bactérienne à 10⁵ germes par ml environ.

Les carrés de tissu inoculés sont répartis en deux groupes. Le premier groupe est immédiatement remis en suspension dans 10 ml de milieu nutritif afin d'évaluer le nombre de germes à t=0. On prélève 100 µl de chaque tube que l'on étale sur la gélose d'une boîte de Pétri et que l'on place à l'étuve pendant 24 heures environ à 37°C. Chaque germe déposé donnant naissance à une colonie circulaire de couleur jaune pâle on peut ainsi après étuvage procéder au dénombrement des Unités Formant Colonies (U.F.C.).

Le deuxième groupe est placé en atmosphère humide à 37°C ± 1°C pendant 24 heures. Après ce temps de contact les carrés sont de la même façon immergés dans des tubes de 10 ml de bouillon nutritif et agités vigoureusement afin de remettre les germes en suspension. On réalise des dilutions successives au 1/10° de chaque tube. 100 µl de chaque dilution sont étalés sur la gélose d'une boîte de Pétri qui est laissée 24 heures à l'étuve à 37°C avant d'être dénombrée.

Les colonies dénombrées permettent de calculer le nombre de germes survivants présents dans les tubes en tenant compte des dilutions.

On a porté dans le tableau 1 ci-dessous les résultats obtenus pour les tissus greffés selon ce premier exemple :

| | Tissu témoin | Tissu greffé |
|---|---|---|
| t = 0 | 34 200 | 37 400 |
| t = 24 h | 2.8 10⁹ | 1 400 |

Le taux de greffage minimum qui, selon les demandeurs, est nécessaire pour obtenir une protection antiseptique est celui qui correspond à la C.M.I. du monomère en phase liquide ; il s'agit dans le présent cas de 4 µg N/g de tissu.

2ème exemple : Dans ce deuxième exemple, on a réalisé un homopolymère antiseptique à partir du même monomère que dans le premier exemple. Plus précisément on a mis en solution 10 g dudit monomère dans 30 ml d'acétonitrile, on a ajouté 23 mg d'AIBN comme amorceur, puis chauffé au bain-marie à 80°C pendant 1h30. L'homopolymère formé est précipité par méthyléthycétone, filtré et séché à l'étuve.

Pour la détermination des concentrations minimales inhibitrices (C.M.I.) de cet homopolymère, on a réalisé une gamme de dilutions entre 200 et 1500 µg/ml selon le même protocole que décrit ci-dessus dans le premier exemple, pour le monomère. Pour l'homopolymère de ce deuxième exemple il a été trouvé que la C.M.I. était inférieure à 200 µg/ml. Dans le but de vérifier l'activité antiseptique de l'homopolymère une fois en contact avec un support textile, cet homopolymère a été mis en solution dans l'eau à une concentration de 0,1%. Des carrés de tissu ont été imprégnés de 200µl de cette solution d'homopolymère. Ils sont ensuite placés sur la gélose d'une boîte de Pétri préalablement inoculée par 200µl d'une suspension bactérienne 10⁵ germes/ml. Des carrés de tissu imprégnés de 200µl d'eau distillée sont également disposée sur une gélose ensemencée à titre de témoins. Les boîtes de Pétri sont toutes placées à incuber 24 heures dans une étuve à 37°C.

Au bout de ce temps d'incubation les carrés de tissu imprégnés de la solution d'homopolymère présentent tous des Zones d'Inhibition (Z.I.) importantes (2 à 5 mm) et aucun développement bactérien à leur surface tandis que les carrés imprégnés par l'eau distillée sont contaminés par les colonies de bactéries et ne présentent aucune Z.I. La présence d'une Zone d'inhibition s'explique par le fait que l'homopolymère n'est pas fixé de façon covalente.

3ème exemple : Dans ce troisième exemple on a réalisé un copolymère antiseptique par copolymérisation du monomère du premier exemple et de l'acrylate d'éthyle.Plus précisément on a dissous 5 g de chaque monomère dans 30 ml d'acétonitrile. On a ajouté 52 mg d'AIBN comme amorceur, puis on a chauffé à 80°C pendant 1h30 au bain-marie. Le copolymère formé est récupéré par évaporation du solvant et lavage à la méthyl éthylcétone. Il est ensuite séché à l'étuve.

On a déterminé la C.M.I. de ce copolymère antiseptique selon le même protocole que dans le premier exemple ; elle était comprise entre 400 et 600µg/ml.

4ème exemple : Dans ce quatrième exemple, on a réalisé un copolymère antiseptique par copolymérisation du monomère du premier exemple et de l'acrylamide, selon le même mode opératoire que dans l'exemple 3 en mettant en oeuvre 5 g de méthacylamide et 69 mg d'AIBN comme amorceur.

La C.M.I. du copolymère antiseptique obtenu était comprise entre 200 et 400 µg/ml.

5ème exemple : Ce cinquième exemple a pour but de montrer la stabilité et l'efficacité de l'action antiseptique d'un polymère selon l'invention, greffé sur un support solide, à savoir un tissu en coton.

Des pièces de tissu blanchi pesant environ 25 g sont immergées dans une solution aqueuse contenant 20% en poids de monomère antiseptique du premier exemple et irradiées par bombardement électronique à une dose d'environ 20kGy. Après 45 minutes de repos, les pièces de tissu sont rincées à l'eau distillée.

La quantité de polymère antiseptique fixée sur le coton a été déterminée par dosage de la fonction ammonium quaternaire par échange d'ions, au moyen d'ions bichromates ; le taux de greffage est de 0,23 meq/g (soit 3,22 mg N/g), ce qui correspond à un taux de greffage fort. Ce mode de dosage par échange d'ions met en évidence l'accessibilité de la fonction ammonium quaternaire contrairement au dosage Kjeldahl où le matériau est entièrement minéralisé.

Suivant le même protocole bactériologique que dans l'exemple 1 I'activité antimicrobienne a été évaluée sur un tissu greffé et sur le même tissu greffé ayant subi 5 cycles de lavage à 40°C en machine à laver avec une lessive commerciale dosée à 5g/l.

Les résultats sont les suivants :

| | Avant lavage | | Après 5 lavages | |
|---|---|---|---|---|
| | témoin | greffé | témoin | greffé |
| t=0 | 37 250 | 50 | 37 150 | 24 900 |
| t=2h | 45 300 | 0 | 51 350 | 11 800 |
| t=6h | 8 . 10⁵ | 0 | 7 . 10⁵ | 600 |
| t=24h | 2 . 10⁸ | 0 | 10⁸ | 0 |

La protection du support a été conservée, même après les cinq lavages.

On observe au temps dit temps zéro une quasi absence de bactéries sur l'échantillon greffé, avant lavage. Ceci s'explique par le temps nécessaire pour effectuer le décompte des bactéries, qui peut être de cinq à dix minutes. Etant donné que, dans le cas présent, le taux de greffage est fort, ce temps est suffisant pour que l'activité antiseptique des greffons se révèle.

6ème exemple : Dans ce sixième exemple, on a assuré la protection antiseptique d'autres supports solides. Il s'agit de non-tissés en polyamide et en viscose, qui ont été greffés à l'aide du monomère du premier exemple dans les conditions suivantes.

Des pièces de non-tissés de polyamide et de viscose, pesant environ 30g, sont immergées dans une solution aqueuse contenant 20% en poids du monomère du premier exemple et irradiées par bombardement électronique à une dose d'environ 20kGy par face après mise en sachet. Après 45 minutes de repos, les échantillons de non-tissés sont rincés à l'eau distillée.

La quantité de polymère antiseptique fixée a été déterminée par dosage de la fonction ammonium quaternaire au moyen des ions bichromates ; le taux de greffage est de 0,47 meq/g (soit 6,58 mg N/g) pour le non-tissé polyamide et de 0,32 meq/g (soit 4,48 mg N/g) pour le non-tissé en viscose.

Suivant le même protocole bactériologique l'activité antimicrobienne a été évaluée sur les deux non-tissés greffés.

Les résultats sont les suivants :

| | Polyamide | | Viscose | |
|---|---|---|---|---|
| | témoin | greffé | témoin | greffé |
| t=0 | 29 200 | 0 | 18 100 | 300 |
| t=2h | 29 600 | 0 | 31 500 | 0 |
| t=6h | 3,3 . 10⁶ | 0 | 7 . 10⁵ | 0 |
| t=24h | 3,5 . 10⁸ | 0 | 4,5 . 10⁸ | 0 |

7ème exemple : Dans ce septième exemple le monomère antiseptique est un chlorure d'ammonium quaternaire comportant, liés à l'atome d'azote, deux groupements d'éthyles pour R₁ et R₂, un groupement benzyle pour R₃ et un méthacrylate d'éthyle. Il répond à la formule suivante :

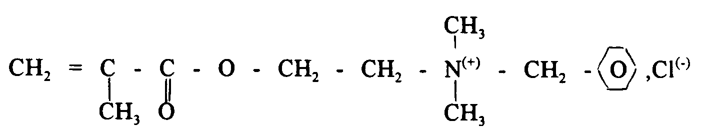

Pour la préparation de ce monomère on fait réagir du chlorure de benzyle sur du méthacrylate de diméthyl amino éthyle.

Plus précisément, on ajoute à 62,8 g de méthacrylate de diméthyl amino éthyle 90 ml de diméthyl formamide. On ajoute ensuite goutte à goutte 56 g de chlorure de benzyle en agitant vivement le milieu réactionnel et en le protégeant de la lumière. On laisse réagir à température ambiante pendant une heure, puis on refroidit le milieu réactionnel au moyen d'un bain de glace et on lui ajoute 60 ml de chloroforme. Le mélange ainsi obtenu est versé dans 500 ml d'éther éthylique sous agitation vive. Il apparaît un précipité que l'on filtre puis que l'on sèche sous vide sur P₂O₅.

On récupère ainsi 110 g de produit sec qui correspond à un rendement de 97%.

Le produit obtenu correspond à la formule précitée. Il s'agit d'un produit pur comme on peut le vérifier par RMN du proton, dosage de l'halogénure par le nitrate d'argent et dosage des insaturations par action de la morpholine en milieu acide acétique/dioxanne.

Comme cela a été fait au premier exemple, on a évalué la concentration minimum inhibitrice de ce monomère antiseptique. La réalisation des gammes de dilutions successives a permis de déterminer que , pour celui-ci, la C.M.I. était comprise entre 400 et 500µg/ml.

Dans les mêmes conditions que dans le premier exemple, on a réalisé le greffage de ce second monomère antiseptique sur un tissu de coton. La quantité de polymère greffé, mesurée à partir du taux d'azote, a été de 0,38 mg N/g de tissu.

On a également vérifié la protection antiseptique des tissus de coton apportée par le polymère fixé par greffage en mettant en oeuvre le même procédé bactériologique que celui décrit au premier exemple. Le tableau ci-dessous reprend les résultats obtenus.

| | Tissu témoin | Tissu greffé |
|---|---|---|
| t = 0 | 34 200 | 35 000 |
| t = 24 h | 2,8 . 10⁹ | 1 000 |

Le taux de greffage minimum pour obtenir une protection antiseptique est, selon les demandeurs de 7 µg N/g de tissu.

8ème exemple : Dans ce huitième exemple on a réalisé un homopolymère antiseptique à partir du monomère du septième exemple. Les conditions opératoires de l'homopolymérisation étaient identiques à celles de l'exemple 2, de même que les conditions de détermination de la C.M.I.. Cette dernière était comprise entre 800 et 1000 µg/l.

Le même test que dans l'exemple 2 a été réalisé en imprégnant un tissu d'une solution de cette homopolymère. Ledit tissu présentait également une Zone d'Inhibition importante.

9ème exemple : Dans ce neuvième exemple on a réalisé un homopolymère antiseptique à partir d'un monomère ayant la formule suivante :

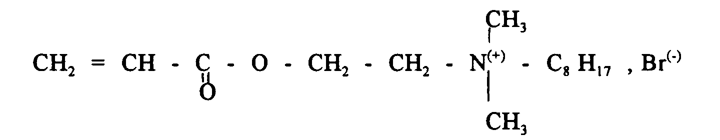

Les conditions opératoires d'homopolymérisation étaient identiques à celles de l'exemple 2, de même que les conditions de détermination de la C.M.I. Cette dernière était comprise entre 400 et 600 µg/ml.

La présente invention n'est pas limitée aux modes de réalisation qui ont été décrits ci-dessus à titre d'exemples non exhaustifs. En particulier s'agissant de la forme copolymérisée, les polymères de l'invention peuvent résulter de la copolymérisation d'un monomère antiseptique ayant la formule générale visée dans la revendication 1 et de beaucoup d'autres monomères, par exemple des monomères époxydes acrylés polymérisables, des esters acryliques mono ou polyfonctionnels, des oligomères polyfonctionnels, des polyesters acrylates, des uréthannes acrylates, des polyéthylènes glycol diacrylate, le triméthylolpropane triacrylate, des dérivés vinyliques acryliques, méthacryliques, acrylamides ou méthacrylamides, ...

Les polymères de l'invention peuvent être mis en oeuvre pour la protection de tout type de support solide, non seulement par fixation sur le support, sous la forme de greffons, ou par imprégnation du support comme cela est décrit dans les exemples mais encore par inclusion dans la structure du support. Il en est ainsi notamment lorsqu'on mélange le polymère à une composition liquide contenant le support et que ledit polymère reste bloqué dans la mase du support après élimination de la phase liquide. Il s'agit en particulier d'encres, de produits d'enduction pour papier, plastique ou textile, de revêtements de type peinture et vernis ou de films plastiques. Dans ce cas, le polymère est stabilisé dans le support solide après solidification de celui-ci, notamment dans un réseau réticulé.

Dans un autre cas d'inclusion du polymère antiseptique de l'invention dans un support solide, on fait pénétrer dans ledit support, tel qu'un matériau naturel comme le bois, une suspension contenant le monomère ayant la formule générale visée dans l'une des revendications, puis on réalise la polymérisation in situ, de sorte que le polymère antiseptique ainsi obtenu est stabilisé dans la structure dudit support et y est réparti de façon plus homogène.

Les polymères de l'invention peuvent être mis en oeuvre pour la protection antiseptique de milieux liquides, en particulier d'émulsions cosmétologiques ou para-pharmaceutiques. Dans ce cas ils sont simplement ajoutés et mélangés de manière homogène avec les autres composants. Il est à noter que leur présence ne modifie pas les qualités de l'émulsion qui reste stable dans le temps.

Lesdits polymères peuvent aussi être utilisés dans des revêtements anti-abrasion, comme agents de floculation dans le traitement des eaux et généralement dans la protection antiseptique de tout support susceptible d'être greffé par voie radiochimique, chimique ou photochimique, qu'il se présente sous quelque forme que ce soit, papier, ouate, textile, non-tissé, feutre notamment. Ils peuvent encore être utilisés dans le domaine agricole pour la protection antiseptique des milieux de culture, par exemple par incorporation ou par enrobage notamment d'engrais. Il est à noter que le polymère de l'invention comporte une fonction azotée qui est compatible avec les formulations commerciales des engrais. Enfin le support solide protégé peut être mis en oeuvre comme matériau filtrant ; dans ce cas, l'activité antiseptique du polymère de l'invention peut aussi s'exercer vis-à-vis du milieu filtré, gazeux ou liquide, qu'il s'agisse par exemple d'épuration biologique de l'eau ou de conditionnement d'air.

## Revendications

1. Procédé de préparation d'un polymère utilisé pour la protection antiseptique d'un support solide ou d'un milieu liquide consistant à faire intervenir au cours d'une réaction de polymérisation un monomère de formule générale : 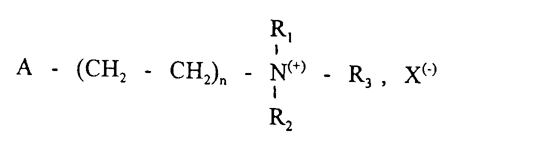 dans laquelle :
a) R₁ et R₂ sont des groupes alkyl respectivement Cₐ H₂ₐ₊₁ pour R₁ et C_{b} H_{2b+1} pour R₂ , et R₃ est soit un groupe alkyl C_{c} H_{2c+1} avec c≥ 4 et 15≥ a+b+c≥ 6 soit un groupe aryle de formule -(CH₂)_{d}- C₆H₅ avec d ≥ 1 et a+b+d ≤ 8
b) 3 ≥ n ≥ 1
c) A est un groupement fonctionnel éthylénique capable d'intervenir dans une réaction de polymérisation
d) X⁽⁻⁾ est un anion.
exception faite des monomères ayant pour formule : 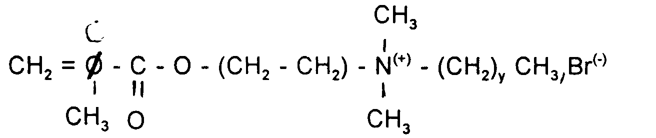 dans laquelle y est égal à 3,4,5,6,7,8,9 ou 11.

2. Procédé selon la revendication 1 dans lequel A est le groupement vinyle.

3. Procédé selon la revendication 1 selon lequel A est un groupement éthylénique de formule générale : 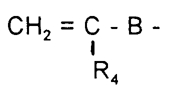 dans laquelle R₄ est - H ou -CH₃,

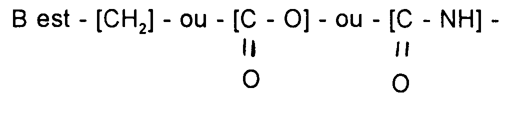

4. Procédé selon la revendication 3 caractérisé en ce qu'il fait intervenir au cours d'une réaction de polymérisation un monomère de formule générale:

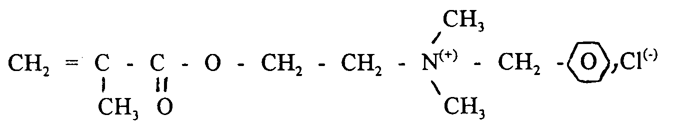

5. Procédé de protection antiseptique d'un support textile à l'aide du polymère obtenu selon un procédé consistant à faire intervenir au cours d'une réaction de polymérisation un monomère de formule générale 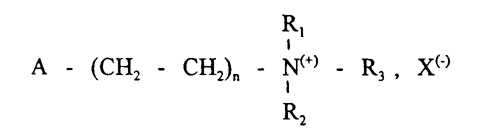 dans laquelle :
a) R₁ et R₂ sont des groupes alkyl respectivement Cₐ H₂ₐ₊₁ pour R₁ et C_{b} H_{2b+1} pour R₂, R₃ est soit un groupe alkyl C_{c} H_{2c+1} avec c≥ 4 et 15 ≥ a+b+c ≥ 6 soit un groupe aryle de formule -(CH₂)_{d}- C₆H₅ avec d ≥ 1 et a+b+d ≤ 8
b) 3 ≥ n ≥ 1
c) A est un groupement fonctionnel éthylénique capable d'intervenir dans une réaction de polymérisation
d) X⁽⁻⁾ est un anion.
caractérisé en ce qu'il consiste à former et à fixer ledit polymère sur ledit support sous forme de greffons au cours d'une réaction de greffage.

6. Tissu coton comprenant le polymère obtenu selon un procédé consistant à faire intervenir au cours d'une réaction de polymérisation un monomère de formule 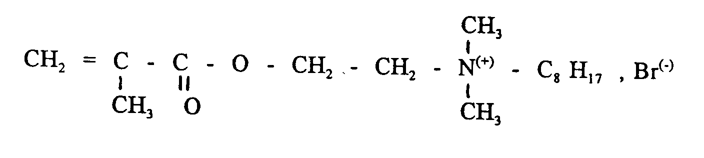 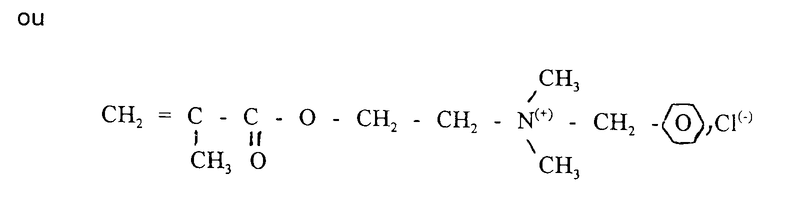 sous forme de greffons caractérisé en ce qu'il comporte de 4 µg à 7 mg d'azote par gramme de tissu.

7. Procédé de protection antiseptique d'un support solide à l'aide du polymère obtenu selon un procédé consistant à faire intervenir au cours d'une réaction de polymérisation un monomère de formule générale : 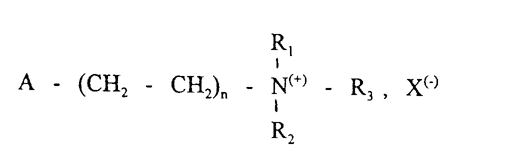 dans laquelle :
a) R₁ et R₂ sont des groupes alkyl respectivement Cₐ H₂ₐ₊₁ pour R₁ et C_{b} H_{2b+1} pour R₂, et R₃ est soit un groupe alkyl C_{c} H_{2c+1} avec c≥ 4 et 15 ≥ a+b+c ≥ 6 soit un groupe aryle de formule -(CH₂)_{d}- C₆H₅ avec d ≥ 1 et a+b+d ≤ 8
b) 3 ≥ n ≥ 1
c) A est un groupement fonctionnel éthylénique capable d'intervenir dans une réaction de polymérisation
d) X⁽⁻⁾ est un anion.
caractérisé en ce qu'il consiste à développer la réaction de polymérisation à partir du monomère antiseptique correspondant après avoir fait pénétrer ledit monomère dans ledit support.

8. Procédé de protection antiseptique d'un support solide , ledit support étant obtenu à partir d'une composition liquide notamment réticulable, caractérisé en ce qu'il consiste à mélanger le polymère obtenu selon un procédé consistant à faire intervenir au cours d'une réaction de polymérisation un monomère de formule générale : 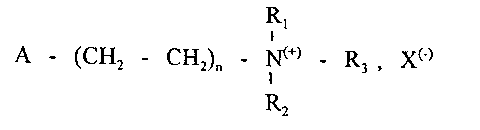 dans laquelle :
a) R₁ et R₂ sont des groupes alkyl respectivement Cₐ H₂ₐ₊₁ pour R₁ et C_{b} H_{2b+1} pour R₂, et R₃ est soit un groupe alkyl C_{c} H_{2c+1} avec c≥ 4 et 15 ≥ a+b+c ≥ 6 soit un groupe aryle de formule -(CH₂)_{d}- C₆H₅ avec d ≥ 1 et a+b+d ≤ 8
b) 3 ≥ n ≥ 1
c) A est un groupement fonctionnel éthylénique capable d'intervenir dans une réaction de polymérisation
d) X⁽⁻⁾ est un anion.
à ladite composition liquide , le polymère étant stabilisé dans le support solide après élimination de la phase liquide.

9. Procédé de protection antiseptique d'un milieu liquide caractérisé en ce que ledit milieu liquide consiste en une émulsion d'un composé cosmétique ou para-pharmaceutique , auquel est mélangé de manière homogène un polymère obtenu par un procédé consistant à faire intervenir au cours d'une réaction de polymérisation un monomère de formule générale : 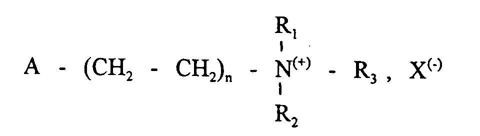 dans laquelle :
a) R₁ et R₂ sont des groupes alkyl respectivement Cₐ H₂ₐ₊₁ pour R₁ et C_{b} H_{2b+1} pour R₂, et R₃ est soit un groupe alkyl C_{c} H_{2c+1} avec c≥ 4 et 15 ≥ a+b+c ≥ 6 soit un groupe aryle de formule -(CH₂)_{d}- C₆H₅ avec d ≥ 1 et a+b+d ≤ 8
b) 3 ≥ n ≥ 1
c) A est un groupement fonctionnel éthylénique capable d'intervenir dans une réaction de polymérisation
d) X⁽⁻⁾ est un anion.

## Claims

1. A process for the preparation of a polymer used for the antiseptic protection of a solid support or of a liquid medium that consists in using, in a polymerisation reaction, a monomer of general formula: 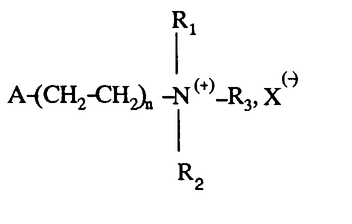 in which:
a) R₁ and R₂ are alkyl groups, respectively CₐH₂ₐ₊₁ for R₁ and C_{b}H_{2b+1} for R₂, and R₃ is either an alkyl group C_{c}H_{2c+1} with c ≥ 4 and 15 ≥ a + b + c ≥ 6 or an aryl group having the formula -(CH₂)_{d}-C₆H₅ with d ≥ 1 and a + b + d ≤ 8,
b) 3 ≥ n ≥ 1,
c) A is an ethylene functional group capable of participating in a polymerisation reaction,
d) X⁽⁻⁾ is an anion.
with the exception of the monomers having the formula: 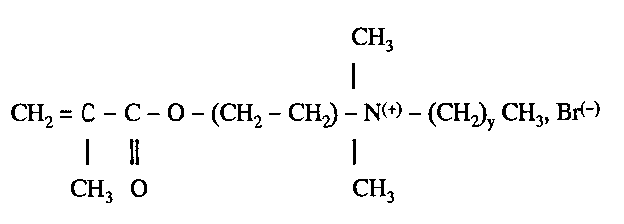 in which y is equal to 3, 4, 5, 6, 7, 8, 9 or 11.

2. A process according to Claim 1 in which A is a vinyl group.

3. A process according to Claim 1 in which A is an ethylene group of general formula: 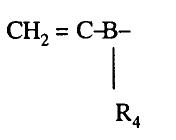 in which R₄ is -H or -CH₃,

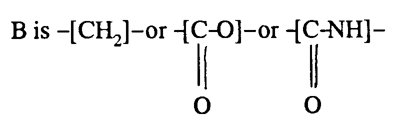

4. A polymer according to Claim 3, characterized in that it uses, in a polymerisation reaction, a monomer of general formula:

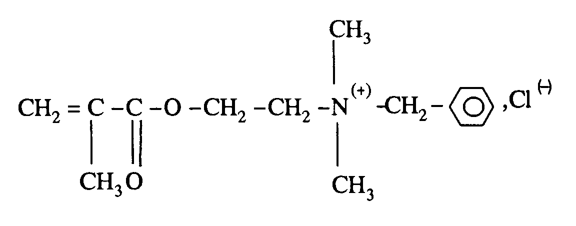

5. A process for the antiseptic protection of a textile support using the polymer obtained according to a process that consists in using, in a polymerisation reaction, a monomer of general formula: 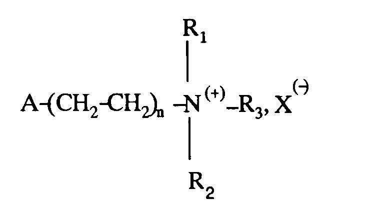 in which:
a) R₁ and R₂ are alkyl groups, respectively CₐH₂ₐ₊₁ for R₁ and C_{b}H_{2b+1} for R₂, and R₃ is either an alkyl group C_{c}H_{2c+1} with c ≥ 4 and 15 ≥ a + b + c ≥ 6 or an aryl group having the formula -(CH₂)_{d}-C₆H₅ with d ≥ 1 and a + b + d ≤ 8,
b) 3 ≥ n ≥ 1,
c) A is an ethylene functional group capable of participating in a polymerisation reaction,
d) X⁽⁻⁾ is an anion.
characterized in that it consists of forming and fixing said polymer to said support in the form of grafts during a grafting reaction.

6. Cotton fabric containing the polymer obtained according to a process that consists in using, in a polymerisation reaction, a monomer of formula: 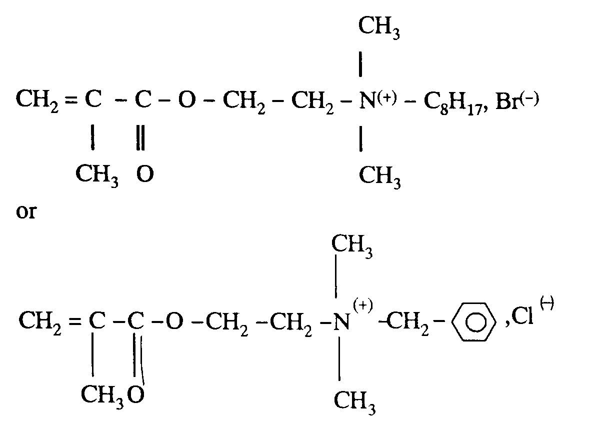 in the form of grafts characterized in that it contains 4 µg to 7 mg nitrogen per gram of fabric.

7. A process for the antiseptic protection of a solid support using the polymer obtained according to a process that consists in using, in a polymerisation reaction, a monomer of general formula: 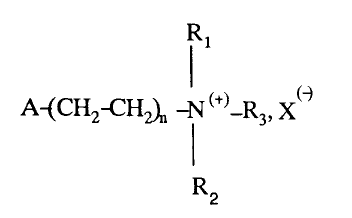 in which:
a) R₁ and R₂ are alkyl groups, respectively CₐH₂ₐ₊₁ for R₁ and C_{b}H_{2b+1} for R₂, and R₃ is either an alkyl group C_{c}H_{2c+1} with c ≥ 4 and 15 ≥ a + b + c ≥ 6 or an aryl group having the formula -(CH₂)_{d}-C₆H₅ with d ≥ 1 and a + b + d ≤ 8,
b) 3 ≥ n ≥ 1,
c) A is an ethylene functional group capable of participating in a polymerisation reaction,
d) X⁽⁻⁾ is an anion,
characterized in that it consists of implementing the polymerisation reaction by means of the corresponding antiseptic monomer after said monomer has penetrated said support.

8. A process for the antiseptic protection of a solid support, said support being obtained from a liquid composition in particular of a reticulable nature, characterized in that it consists of mixing the polymer obtained according to a process that consists in using, in a polymerisation reaction, a monomer of general formula: 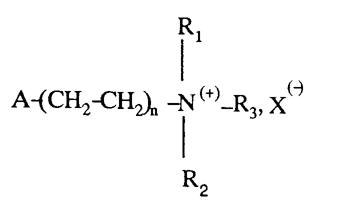 in which:
a) R₁ and R₂ are alkyl groups, respectively CₐH₂ₐ₊₁ for R₁ and C_{b}H_{2b+1} for R₂, and R₃ is either an alkyl group C_{c}H_{2c+1} with c ≥ 4 and 15 ≥ a + b + c ≥ 6 or an aryl group having the formula -(CH₂)_{d}-C₆H₅ with d ≥ 1 and a + b + d ≤ 8,
b) 3 ≥ n ≥ 1,
c) A is an ethylene functional group capable of participating in a polymerisation reaction,
d) X⁽⁻⁾ is an anion,
with said liquid composition, the polymer being stabilized in the solid support after elimination of the liquid phase.

9. A process for the antiseptic protection of a liquid medium, characterized in that said liquid medium consists of an emulsion of a cosmetic or parapharmaceutical compound with which has been mixed in homogeneous fashion a polymer obtained by a process that consists in using, in a polymerisation reaction, a monomer of general formula: 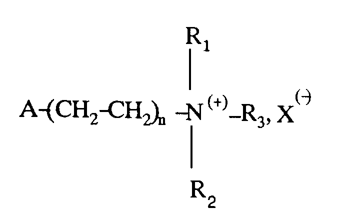 in which:
a) R₁ and R₂ are alkyl groups, respectively CₐH₂ₐ₊₁ for R₁ and C_{b}H_{2b+1} for R₂, and R₃ is either an alkyl group C_{c}H_{2c+1} with c ≥ 4 and 15 ≥ a + b + c ≥ 6 or an aryl group having the formula -(CH₂)_{d}-C₆H₅ with d ≥ 1 and a + b + d ≤ 8,
b) 3 ≥ n ≥$ 1,
c) A is an ethylene functional group capable of participating in a polymerisation reaction,
d) X⁽⁻⁾ is an anion.

## Patentansprüche

1. Verfahren zur Herstellung eines zum antiseptischen Schutz einer festen Unterlage oder eines flüssigen Mediums verwendeten Polymeren, das daraus besteht, daß man ein Monomeres der folgenden allgemeinen Formel an einer Polymerisationsreaktion beteiligt: 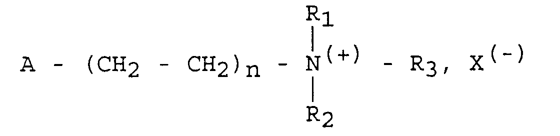 in der:
a) R₁ und R₂ Alkylgruppen der Formel CₐH₂ₐ₊₁ für R₁ bzw. C_{b}H_{2b+1} für R₂ bedeuten und R₃ eine Alkylgruppe der Formel C_{c}H_{2c+1} mit c ≥4 und 15 ≥ a+b+c ≥6 oder eine Arylgruppe der Formel -(CH₂)_{d}-C₆H₅ mit d ≥1 und a+b+d ≤8 bedeutet,
b) 3 ≥ n ≥ 1,
c) A eine funktionelle ethylenische Gruppe bedeutet, die an einer Polymerisationsreaktion teilnehmen kann,
d) X⁽⁻⁾ ein Anion bedeutet,
mit Ausnahme von Monomeren der Formel 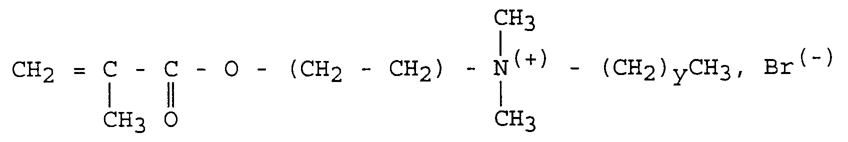 in der y den Wert 3, 4, 5, 6, 7, 8, 9 oder 11 hat.

2. Verfahren nach Anspruch 1, wobei A eine Vinylgruppe bedeutet.

3. Verfahren nach Anspruch 1, wobei A eine ethylenische Gruppe der folgenden Formel bedeutet: 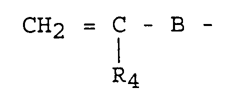 in der R₄ die Bedeutung -H oder -CH₃ hat,

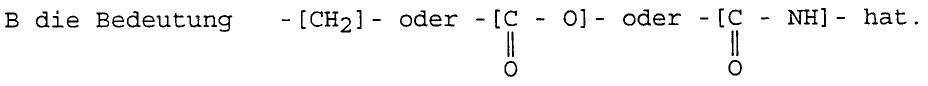

4. Verfahren nach Anspruch 3, dadurch gekennzeichnet, daß man eine Polymerisationsreaktion unter Beteiligung eines Monomeren der folgenden allgemeinen Formel durchführt:

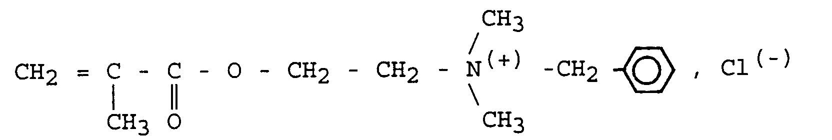

5. Verfahren zum antiseptischen Schutz einer textilen Unterlage mit Hilfe eines Polymeren, das durch ein Verfahren erhalten worden ist, das darin besteht, daß man ein Monomeres der folgenden allgemeinen Formel an einer Polymerisationsreaktion beteiligt: 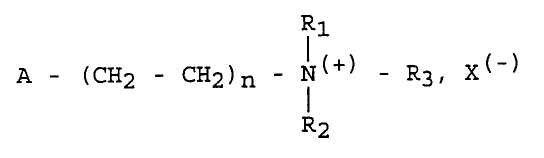 in der:
a) R₁ und R₂ Alkylgruppen der Formel CₐH₂ₐ₊₁ für R₁ bzw. C_{b}H_{2b+1} für R₂ bedeuten und R₃ eine Alkylgruppe der Formel C_{c}H_{2c+1} mit c ≥4 und 15 ≥ a+b+c ≥6 oder eine Arylgruppe der Formel -(CH₂)_{d}-C₆H₅ mit d ≥1 und a+b+d ≤8 bedeutet,
b) 3 ≥ n ≥ 1,
c) A eine funktionelle ethylenische Gruppe bedeutet, die an einer Polymerisationsreaktion teilnehmen kann,
d) X⁽⁻⁾ ein Anion bedeutet,
dadurch gekennzeichnet, daß das Verfahren in der Bildung und Fixierung des Polymeren auf dem Träger in Form von Pfropfprodukten im Verlauf einer Propfreaktion besteht.

6. Textiler Baumwoll-Werkstoff, enthaltend ein Polymeres, das durch ein Verfahren erhalten worden ist, das darin besteht, daß man ein Monomeres der folgenden allgemeinen Formel 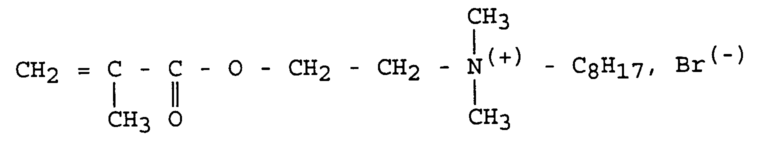 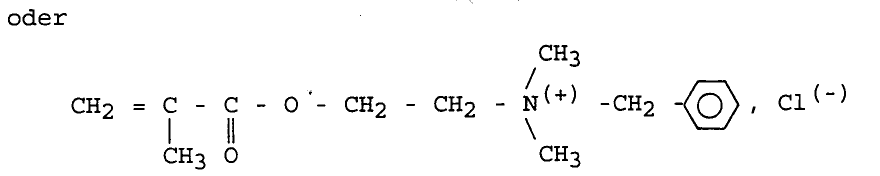 in Form von Pfropfprodukten an einer Polymerisationsreaktion beteiligt, dadurch gekennzeichnet, daß der Werkstoff 4 µg bis 7 mg Stickstoff pro Gramm des Werkstoffes enthält.

7. Verfahren zum antiseptischen Schutz einer festen Unterlage mittels eines Polymeren, das durch ein Verfahren erhalten worden ist, das darin besteht, daß man ein Monomeres der folgenden allgemeinen Formel an einer Polymerisationsreaktion beteiligt 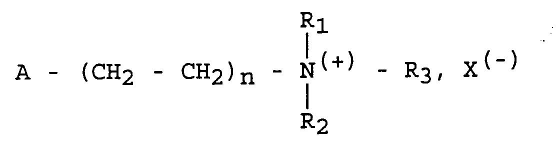 in der:
a) R₁ und R₂ Alkylgruppen der Formel CₐH₂ₐ₊₁ für R₁ bzw. C_{b}H_{2b+1} für R₂ bedeuten und R₃ eine Alkylgruppe der Formel C_{c}H_{2c+1} mit c ≥4 und 15 ≥ a+b+c ≥6 oder eine Arylgruppe der Formel -(CH₂)_{d}-C₆H₅ mit d ≥1 und a+b+d ≤8 bedeutet,
b) 3 ≥ n ≥ 1,
c) A eine funktionelle ethylenische Gruppe bedeutet, die an einer Polymerisationsreaktion teilnehmen kann,
d) X⁽⁻⁾ ein Anion bedeutet,
dadurch gekennzeichnet, daß es in der Entwicklung einer Polymerisationsreaktion ausgehend von einem entsprechenden antiseptischen Monomeren, nachdem man für ein Eindringen dieses Monomeren in die Unterlage gesorgt hat, besteht.

8. Verfahren zum antiseptischen Schutz einer festen Unterlage, wobei die Unterlage ausgehend von einer flüssigen, insbesondere vernetzbaren Zusammensetzung erhalten worden ist, dadurch gekennzeichnet, daß das Verfahren darin besteht, daß man ein Polymeres, das nach einem Verfahren erhalten worden ist, das darin besteht, daß man ein Monomeres der folgenden allgemeinen Formel an einer Polymerisationsreaktion beteiligt in der: 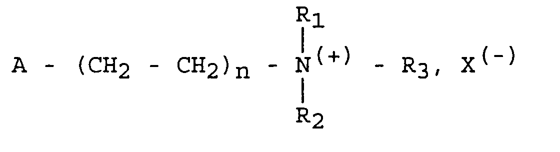
a) R₁ und R₂ Alkylgruppen der Formel CₐH₂ₐ₊₁ für R₁ bzw. C_{b}H_{2b+1} für R₂ bedeuten und R₃ eine Alkylgruppe der Formel C_{c}H_{2c+1} mit c ≥4 und 15 ≥ a+b+c ≥6 oder eine Arylgruppe der Formel -(CH₂)_{d}-C₆H₅ mit d ≥1 und a+b+d ≤8 bedeutet,
b) 3 ≥ n ≥ 1,
c) A eine funktionelle ethylenische Gruppe bedeutet, die an einer Polymerisationsreaktion teilnehmen kann,
d) X⁽⁻⁾ ein Anion bedeutet,
mit der flüssigen Zusammensetzung vermischt, wobei das Polymere auf der festen Unterlage nach Entfernung der flüssigen Phase stabilisiert ist.

9. Verfahren zum antiseptischen Schutz eines flüssigen Mediums, dadurch gekennzeichnet, daß das flüssige Medium aus einer Emulsion einer kosmetischen oder parapharmazeutischen Zusammensetzung besteht, der in homogener Weise ein Polymeres zugemischt wird, das durch ein Verfahren erhalten worden ist, das darin besteht, daß man ein Monomeres der folgenden allgemeinen Formel an einer Polymerisationsreaktion beteiligt 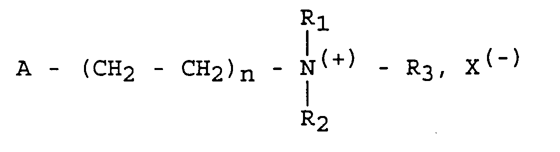 in der:
a) R₁ und R₂ Alkylgruppen der Formel CₐH₂ₐ₊₁ für R₁ bzw. C_{b}H_{2b+1} für R₂ bedeuten und R₃ eine Alkylgruppe der Formel C_{c}H_{2c+1} mit c ≥4 und 15 ≥ a+b+c ≥6 oder eine Arylgruppe der Formel -(CH₂)_{d}-C₆H₅ mit d ≥1 und a+b+d ≤8 bedeutet,
b) 3 ≥ n ≥ 1,
c) A eine funktionelle ethylenische Gruppe bedeutet, die an einer Polymerisationsreaktion teilnehmen kann,
d) X⁽⁻⁾ ein Anion bedeutet.
